Europäisches Patentamt

European Patent Office

Office européen des brevets

(19)

(11) Publication number: **0 225 164**
**A2**

# (12) EUROPEAN PATENT APPLICATION

(21) Application number: **86309204.5**

(22) Date of filing: **26.11.86**

(51) Int. Cl.⁴: **B 32 B 27/34**
**B 65 D 65/40**

(30) Priority: **27.11.85 FI 854688**

(43) Date of publication of application:
**10.06.87 Bulletin 87/24**

(84) Designated Contracting States:
**BE DE FR GB IT NL SE**

(71) Applicant: **Wihuri Oy**
**PO Box 45**
**SF-15560 Nastola (FI)**

(72) Inventor: **Juselius, Jukka Juhani**
**Lumikintie 5**
**SF-15550 Rakokivi (FI)**

**Korte, Erkki Arvo Ensio**
**Rinnetie 14**
**SF-15560 Nastola (FI)**

(74) Representative: **Carpmael, John William Maurice et al**
**CARPMAELS & RANSFORD 43 Bloomsbury Square**
**London, WC1A 2RA (GB)**

A request for correction line 4 of claim 1 has been filed pursuant to Rule 88 EPC. A decision on the request will be taken during the proceedings before the Examining Division (Guidelines for Examination in the EPO, A-V, 2.2).

(54) **A new strong and impermeable multiple-layer film.**

(57) The invention relates to a strong and gas-tight multiple-layer film in which at least one layer is polyamide. In multiple-layer films of polyamides and polyolefins the properties of the layers excellently supplement one another. The polyamide layer renders the film strong, elastic, transparent, heat-resistant, impermeable to gas, and aroma-tight. It has now been observed that the polyamide layer can be further strengthened by making it from several polyamide layers glued together by using an adhesive polymer. The invention is thus characterized in that the polyamide layer is in the form of a laminate in which layers of polyamide and adhesive alternate. Thus a film is obtained which has good flex-crack values and a high tearing resistance and which is very suitable for the packaging of various products such as foodstuffs.

EP 0 225 164 A2

Bundesdruckerei Berlin

## Description

A new strong and impermeable multiple-layer film

The invention relates to a mechanically strong and gas-tight multiple-layer film in which at least one layer is polyamide.

In transparent composite films made up of polyamide (PA) and polyethylene (PE) layers, the properties of the layers supplement one another in an excellent manner, and therefore such films have been used with success for the packaging of various products such as foodstuffs. The PA layer makes the film strong, elastic, transparent, heat-resistant, impermeable to gas such as oxygen, and aroma-tight. The PE layer makes the film impermeable to water-vapor and, when serving as the inner layer of the film, PE is inert with respect to foodstuffs and easily heat-sealed.

In the manufacture of the said multiple-layer films, adherence between the layers of PA and PE has been obtained by, for example, applying between the layers an adhesive polymer, such as a polymer of ethylene and carboxylic acid, an ionomer, or a mixture of them with polyolefin (U.S. Patents 3,423,231, 3,697,368, and 3,791,915), or a cross-linkable polymer of ethylene and vinyl acetate (FI Patent Application 792 087). Adhesion has also been enhanced by chemically modifying polyamide (SE Lay-Open Print 7,402,387) FI Patent Applications 762 418 and 833 988), polyethylene (DK Lay-Open Print 125 864, U.S. Patent 4,058,647, U.S. Patent 4,322,480), or both (DE Lay-Open Print 3,114,771.2)

The order of the layers in the multiple-layer films intended for packaging depends on the machining conditions and projected uses of the films. Since the permeability to gases of the PA layer worsens with increasing humidity, endeavors are usually made to protect it from the moisture content of air and of the material to be packaged, by using polyolefin types which are impermeable to water vapor and suitable for heat sealing.

U.S. Patent 3,423,231 discloses a number of possible polyamide-polyolefin multiple-layer films in which a copolymer of ethylene and acrylic acid (EAA) is used between the layers. The most advanced embodiment of this patent is shown in Figure 3, in which the PA layer is protected by two polyolefin layers and there is EAA adhesive polymer between the layers. FI Patent Application 792 087 discloses as the most advantageous multiple-layer combination a similar film, but in it the adhesive polymer used is a copolymer of ethylene and vinyl acetate, which under the effect of ionizing radiation cross links with the olefin polymer. In the above-mentioned multiple-layer films the outermost layer is usually a polyolefin with a higher resistance to heat, e.g. MD polyethylene, and the inner layer is heat-sealable LD polyethylene or a copolymer of ethylene and vinyl acetate (EVA).

FI Patent Application 833 988 describes heat-sealable polyamide copolymer (CoPA) layers which are resistant to heat and therefore suitable for the manufacture of multiple-layer films which shrink when exposed to heat. However, polyamide copolymers have a worsened permeability to gas as compared to polyamide homopolymers, and therefore they must be laminated with gas-impermeable polymers such as copolymer of ethylene and vinyl alcohol (EvOH) or polyvinylidene chlorride (PVDC) plastics. The following are examples of the multiple-layer films mentioned in the publication:
CoPA/EvOH/CoPA, CoPA/adhesive/filler/PVDC/EVA, and CoPA/adhesive 1/adhesive 2/PVDC/adhesive 3/EVA.

Otto Nielsen AS has laminated between two PA layers a highly impermeable barrier layer, evidently of EvOH (Packmarknaden Scandinavia 1984, No. 3, p. 80). The impermeability of the new $O_2$-impermeable and $CO_2$-impermeable film is in the order of that of a PVDC-lackuered film, but it has the additional advantage that the barrier layer can, when necessry, be made thicker, whereby both its impermeability to gas and its ability to be deep-drawn are improved.

The strength of the above-mentioned multiple-layer films according to the state of the art is based mainly on the strength and elasticity of the PA serving as the supporting layer. The other layers have effect mainly only on the permeability of the films to gases and water vapor and on their heat-sealability. Thus, in films according to the state of the art it is the type and thickness of the PA layer used that decisively determine the mechanical properties of the film, such as its ability to be deep-drawn during packaging, its flex-crack resistance and its tearing resistance.

Now a new multiple-layer film has been invented which is suitable for packaging and the supporting polyamide layer of which is made up of several PA layers glued together by using adhesive polymers. The multiple-layer film according to our invention is thus characterized in that the polyamide layer is in the form of a laminate in which layers of PA and an adhesive polymer alternate. Thus a multiple-layer film which is stronger and more impermeable to $O_2$ and which is suitable for packaging has been invented by replacing the conventional supporting PA layer with a layer of a laminate of polyamide and an adhesive.

The deep-drawability during packaging of this new-type laminated supporting layer is improved, since the soft and highly adhesive layer of adhesive allows the stronger polyamide layers to move in relation to each other when the film is being molded on a cup, whereby the local stretching strains on the polyamide layers are reduced. Formation of flex cracks is reduced, since the soft, elastic adhesive layer prevents fold formation which greatly stresses the material. Tearing resistance is improved, since the strength of polyamide and the softer consistency of the adhesive layer are capable of supplementing one another owing to the good adhesion. The number of layers in the multiple-layer film according to our invention is greater than previously, but the film can be manufactured by modern manufacturing techniques, known to an expert in the art, as easily as can films according to the state of the art.

The polyamide (PA) used in the invention is of a type known in the art. Thus it is possible to use PA types PA 66, PA 6, PA ll and PA l2, either alone or as a mixture. It is also possible to use copolyamides such as PA 6/l2, PA 6/66, etc. Since the invention is based on a laminate made up of several polyamide layers, the optimal materials for layers for each specific use can be selected from among these polyamides. When necessary, the PA surfaces can also be modified chemically in order to improve adhesion.

The adhesive polymer by means of which the polyamide layers are glued together is also of a type well known in the art. Since a polymer which contains carboxylic groups adheres very well to polyamide, the most preferable adhesive polymer is a copolymer of unsaturated carboxylic acids and ethylene, for example a copolymer of ethylene and acrylic acid, EEA. Especially good results are accomplished using adhesive polymers having a carboxylic acid comonomer content of 4 - 30 %. Dow's Primacor, Mitsubishi's Admer and Esso's Escor are such adhesive polymers. Copolymers of the ethylene - vinyl acetate type and ionomer can also be used as adhesive polymers. An ethylene monomer used in the adhesive copolymer gives the adhesive layer of the PA laminate according to the invention softness and viscosity, and also protects the polyamide layers from moisture which would decrease their impermeability, and thereby the $O_2$-impermeability of the entire film is improved.

As mentioned above, the present invention relates to a multiple-layer film in which the conventional supporting PA layer has been replaced with a supporting PA laminate layer of a new type:
PA/[adhesive polymer/PA]$_n$
where n is an integer $\geq$ l. The simplest supporting layer according to the invention is thus PA/adhesive/PA. When a supporting layer is combined into a multiple-layer film for packaging, a typical film according to the state of the art will be, for example:
PA/adhesive polymer/EvOH/adhesive polymer/PE filler layer/sealing layer,
but a strong and impermeable layer according to the invention will be:
PA/[adhesive polymer/PA]$_n$/adhesive polymer/EvOH/adhesive polymer/PE filler layer/sealing layer

The multiple-layer films according to the invention are thus films in which the said laminate of PA and adhesive is optimally combined with other plastic layers, giving the film improved mechanical properties and improved impermeability to gases, especially oxygen.

In the PA laminate of a packaging film according to the invention it is especially advantageous to orient the molecules of the PA layers in the film. Such oriented PA layers greatly increase, for example, the strength of the film in the direction of stretching, while the other properties of the film are retained. Biaxial orientation is also possible. The orientation is done by stretching the film in a manner known per se.

The thickness of the PA laminate layer of the multiple-layer film according to the invention is approximately l0-200 μm, preferably approximately l0-l00 μm. The total proportion of polyamide in the thickness of the supporting layer may be within the range l0-90 %, in which case the number and thickness of the various polyamide layers can be selected so as to obtain the desired properties for the film.

The best techniques for manufacturing the multiple-layer films according to the invention are coextrusion blowing, sheet film coextrusion, and coextrusion coating. If the different PA layers are of the same PA type, the die can be designed so that all of the PA layers emerge from one extruder and all the adhesive layers from another. In this case, free extruders are left for other layers, such as barrier, filler and sealing layers, i.e. the invention does not necessarily involve high extra costs of equipment. In other respects, the known coextrusion techniques, in which the device parameters are set so as to suit the materials used, are used for the manufacture of the multiple-layer film according to the invention. Coextrusion methods can also be combined with other methods such as lamination.

The transparent multiple-layer films according to the present invention are best suited for use in the packaging of foodstuffs, for example. Owing to their heat resistance they can be heated in hot water, be heat-sterilized, and be heat-sealed. Owing to their impermeability they keep foodstuffs well. The impermeability also enables goods to be vacuum packed and inert gas packed. Owing to the present invention, the multiple-layer films impermeable to gas are now also stronger than before and have a higher impermeability to gas and are especially resistant to deep-drawing packaging and rough handling.

Examples

Examples are presented below of how PA lamination according to the invention improves the properties of a multiple-layer film. In the examples, the supporting layer, i.e. the basic film, in the multiple-layer film according to the invention is PA/adhesive polymer/PA. This basic film was produced by sheet film coextrusion. The film, the properties of which are shown in Table III, has an approximately 20 μm supporting layer PA/adhesive polymer/PA, which was laminated together with an approximately 65 μm polyethylene layer.

The types of plastic used in the different experiments were:

| Symbol | Type |
|---|---|
| PA(1)-(4) | PA6 |
| adh. | COOH-containing PE copolymer |
| PE(2065) | LDPE |
| PA(2065) | PA6 |
| WOPA-15(1,2) | PA6 (oriented film) |

Table I shows the properties of the 20-μm-thick supporting layer, i.e. the PA/adhesive polymer/PA basic film, of the multiple-layer film according to the invention, and compares them with equally thick films according to the state of the art. Table II shows the properties of the 40-μm-thick supporting layer, i.e. the PA/adhesive polymer/PA film, of the multiple-layer film according to the invention, and compares them with equally thick films according to the state of the art. Table III shows the properties of a PA/adhesive polymer/PA/PE film according to the invention and compares them with a PA/PE film according to the state of the art. Table IV shows the properties of the oriented supporting layer, i.e. the PA/adhesive polymer/PA basic film, of the multiple-layer film according to the invention. This film according to one preferred embodiment of the invention was obtained by orienting monoaxially an approximately 20 μm thick film according to Table I by stretching it so that the final thickness is approximately l5 μm.

T a b l e I

## MULTI-W 3-LAYER COEXTRUSION

| Testing method or device | PROPERTY | | MATERIALS PA(2)/adh./PA(2) 10/5/10   m=20   mPA | Wipak PA(3) 20 μm | Wipak PA(4) 20 μm |
|---|---|---|---|---|---|
| ASTM D-822 | Elastic modulus $(N/mm^2)$ | MD[*)] TD | 890 948 | 1003 1170 | 897 869 |
| ASTM D-822 | Tensile strength $(N/mm^2)$ | MD TD | 77.0 65.9 | 110.0 98.0 | 89.0 98.0 |
| ASTM D-822 | Elongation (%) | MD TD | 431 411 | 412 488 | 390 400 |
| | Shrinkage/ elongation (%) 130 °C/60 s (incubator) | MD TD | −0.5 ±0 | −1.0 −0.3 | −0.8 −0.5 |
| FTD-101B-2017 | Flex-crack (5 test specimens) $(holes/m^2/$ 20 min) | | 300 | 450 | 490 |
| OXTRAN 100 | $O_2$-permeability, 24 °C, 20 % RH $(cm^3/m^2/20\ min)$ | | 32 | 36 | 43 |
| ASTM D-2457 | Gloss | | 136.3 | 121 | 109 |
| ASTM D-1746 | Light transmission (%) | | 91.2 | 90 | 90 |
| ASTM D-1922 | Tearing resistance (Elmendorf) (mN) | | 3620/2840 | | 47/57 |
| Flat-tipped pin ⌀ 1 mm | Resistance to puncture (N) | | 5.2 | 4.2 | 4.0 |

\* MD = in machine direction
   TD = in direction transverse to the machine

Table I. Most important properties of an approx. 20-μm-thick PA/adhesive polymer/PA basic film of a multiple-layer film according to the invention, as compared with films according to the state of the art.

# T a b l e II

## MULTI-W 3-LAYER COEXTRUSION

| Testing method or device | PROPERTY | | MATERIALS | | |
|---|---|---|---|---|---|
| | | | | | LOWER FILM PA: |
| | | | PA(1)/adh./PA(1) 40 µm | PA(2)/adh./PA(2) 40 µm | Wipak PA(4) 40 µm |
| ASTM D-822 | Elastic modulus (N/mm$^2$) | MD[*] TD | 673 714 | 828 785 | 1139 1140 |
| ASTM D-822 | Tensile strength (N/mm$^2$) | MD TD | 87.9 89.3 | 84.1 71.3 | 109.6 92.8 |
| ASTM D-822 | Elongation (%) | MD TD | 513 530 | 517 468 | 535 495 |
| | Shrinkage/ elongation (%) 130 °C/60 s (incubator) | MD TD | −0.7 −0.5 | −0.8 −0.6 | −0.7 −0.5 |
| ASTM D-1922 | Tearing resistance MD Elmendorf(mN) TD | | 3920 900−over 4000[**] | over 4000 3920−over 4000[**] | 147 153 |
| ASTM D-2457 | Gloss | | 142.6 | 146.9 | 131.3 |
| ASTM D-1746 | Light trans- mission (%) | | 91.0 | 92.0 | 90.3 |
| FTD-101B-2017 | Flex-crack (5 test specimens) (holes/m$^2$/ 20 min) | | 380 | 710 | 1250 |
| OXTRAN 100 | O$_2$-permeability, 24 °C, 20 % RH (cm$^3$/m$^2$/20 min) | | 20 | 21 | 25 |
| Flat-tipped pin ⌀ 1 mm | Resistance to puncture (N) | | 7.6 | 8.3 | 7.8 |

[**] does not tear all the way, stretches
[*] TD = in direction transverse to the machine

Table II. Most important properties of an approx. 40-µm-thick PA/adhesive polymer/PA basic film of a multiple-layer film according to the invention, as compared with equally thick films according to the state of the art.

**T a b l e III**

| Testing method or device | PROPERTY | | PA(2)/adh./PA(2)/PE 2065, 20 μm | 65 μm | PAE 2065 Wipak standard quality 20 μm PA+65 μm PE |
|---|---|---|---|---|---|
| ASTM D-822 | Elastic modulus (N/mm²) | MD*) | 302 | | 282 |
| | | TD | 309 | | 308 |
| ASTM D-822 | Tensile strength (N/mm²) | MD | 35.5 | | 29.5 |
| | | TD | 26.2 | | 28.1 |
| ASTM D-822 | Elongation (%) | MD | 513 | | 373 |
| | | TD | 537 | | 523 |
| ASTM D-1922 | Tearing resistance Elmendorf (mN) | MD | 1080-over 4000 | | 177 |
| | | TD | 1380-over 4000 | | 1153 |
| FTD-101B-2017 | Flex-crack (5 test specimens) (holes/m²/ 20 min) | | 100 | | 200 |
| ASTM D-2457 | Gloss | | 125.6 | | 117.0 |
| ASTM D-1746 | Light transmission (%) | | 89.6 | | 88.4 |

\* MD = in machine direction
  TD = in direction transverse to the machine

Table III. Most important properties of the PA/adhesive polymer/PA/PE film according to the invention, as compared with films according to the state of the art.

## T a b l e IV

ORIENTATION OF PA

| Testing method or device | PROPERTY | | MATERIALS | | |
|---|---|---|---|---|---|
| | | | monoaxially oriented PA(1)/adh./PA(1) 15 µm | WOPA-15 (1) 15 µm | WOPA-15 (2) 15 µm |
| ASTM D-822 | Elastic modulus $(N/mm^2)$ | MD[*] TD | 1188 1896 | 1625 2465 | 1383 2177 |
| ASTM D-822 | Tensile strength $(N/mm^2)$ | MD TD | 295 69 | 294 63 | 294 74 |
| ASTM D-822 | Elongation (%) | MD TD | 90 518 | 70 380 | 88 423 |
| | Shrinkage/ elongation (%) 130 °C/60 s (incubator) | MD TD | -2.0 -0.3 | -1.6 -0.5 | -1.3 -0.2 |
| ASTM D-1922 | Tearing resistance Elmendorf(mN) | MD TD | 83 360 | 42 135 | 13 137 |
| ASTM D-2457 | Gloss | | 156.8 | 145.5 | 144.8 |
| ASTM D-1746 | Light trans- mission (%) | | 93.1 | 92.6 | 92.3 |
| FTD-101B-2017 | Flex-crack (5 test specimens) $(holes/m^2/ 20\ min)$ | | 10 | 80 | 100 |
| OXTRAN 100 | $O_2$-permeability, 24 °C, 20 % RH $(cm^3/m^2/20\ min)$ | | 42 | 37 | 35 |
| Flat- tipped pin ⌀ 1 mm | Resistance to puncture (N) | | 5.5 | 6.2 | 5.3 |

\* MD = in machine direction
   TD = in direction transverse to the machine

Table IV. Properties of the oriented supporting layer, i.e. PA/adhesive polymer/PA basic film, of a multiple-layer film according to the invention, as compared with oriented films according to the state of the art.

## Claims

1. A mechanically strong and gas-tight multiple-layer film in which at least one layer is polyamide, **characterized in** that the polyamide layer is in the form of a laminate in which layers of polyamide and adhesive alternate.

2. A multiple-layer film according to Claim I, **characterized in** that the polyamide is oriented.

3. A multiple-layer film according to Claim I, **characterized in** that the adhesive polymer is a copolymer of ethylene and carboxylic acid.

4. A multiple-layer film according to any of the above claims, **characterized in** that it contains a heat-sealing layer in addition to the polyamide layer.

5. A multiple-layer film according to any of the above claims, **characterized in** that it contains a filler layer of polyolefin, preferably of polyethylene.

6. A multiple-layer film according to any of the above claims, **characterized in** that it contains a gas-barrier layer which is preferably a polymer of ethylene and vinyl alcohol.

7. A multiple-layer film according to any of the above claims, **characterized in** that the polyamide is PA 6 or PA 66.

8. A multiple-layer film according to any of the above claims, **characterized in** that the thickness of the laminate is approximately I0-200 μm, preferably approximately I0-I00 μm.

9. A multiple-layer film according to any of the above claims, **characterized in** that he total proportion of polyamide in the laminate is I0-90 %.